Europäisches Patentamt

European Patent Office

Office européen des brevets

(19)

(11) Veröffentlichungsnummer : **0 371 975 B1**

# EUROPÄISCHE PATENTSCHRIFT

(12)

(45) Veröffentlichungstag der Patentschrift :
29.04.92 Patentblatt 92/18

(21) Anmeldenummer : 88905375.7

(22) Anmeldetag : 21.06.88

(86) Internationale Anmeldenummer :
**PCT/EP88/00545**

(87) Internationale Veröffentlichungsnummer :
**WO 88/10376 29.12.88 Gazette 88/28**

(51) Int. Cl.⁵ : **F16D 25/14**

(54) **KUPPLUNGSEINRICHTUNG.**

(30) Priorität : 27.06.87 DE 3721318

(43) Veröffentlichungstag der Anmeldung :
13.06.90 Patentblatt 90/24

(45) Bekanntmachung des Hinweises auf die
Patenterteilung :
29.04.92 Patentblatt 92/18

(84) Benannte Vertragsstaaten :
DE GB IT

(56) Entgegenhaltungen :
EP-A- 0 142 221
EP-A- 0 195 463
DE-A- 3 443 064
GB-A- 1 393 285
GB-A- 2 153 035
US-A- 3 251 439

(73) Patentinhaber : **ZF FRIEDRICHSHAFEN
Aktiengesellschaft
Löwentaler Strasse 100 Postfach 2520
W-7990 Friedrichshafen 1 (DE)**

(72) Erfinder : **PETZOLD, Rainer
Oberhofstra e 79
W-7990 Friedrichshafen (DE)**
Erfinder : **FRITZ, Walter
Appenzellerstra e 3
W-7990 Friedrichshafen (DE)**
Erfinder : **WIENCEK, Norbert
Ittendorfer Stra e 1
W-7759 Hagnau (DE)**

Jouve, 18, rue Saint-Denis, 75001 PARIS

## Beschreibung

Die Erfindung betrifft eine Kupplungseinrichtung für Kraftfahrzeuge mit einer hilfskraftbetätigten Kupplung zwischen einer Antriebsmaschine und einem Getriebe nach dem Oberbegriff von Anspruch 1. Solche Kupplungseinrichtungen sind in vielen verschiedenen Ausführungen bekannt - ATZ Heft 3 und 4, 1959, EP-A-0 142 221.

Aus der DE-A-34 38 594 ist eine moderne Kupplungseinrichtung bekannt, wobei eine von einem Positionsgeber beeinflußte Kupplungssteuerung über ein elektrisches Stellglied - elektrischer Stellmotor - und einem Geber- und Nehmerzylinder die Kupplung verstellt wird, um z. B. von der Antriebsmaschine kommende Schwingungen zu unterdrücken.

Es ist weiter bekannt, Signale aus einem elektronischen Steuergerät in einem Steuergerät zur Beeinflussung einer Hilfskraft zu verwenden. Diese beeinflußte Hilfskraft wird über eine Leitung einer Stelleinrichtung für eine Kupplung zugeleitet. Weiter ist zwischen Kupplung und dem elektronischen Steuergerät noch eine Wegmeßeinrichtung angeordnet. Diese Kupplungseinrichtung wird vorrangig zum Anfahren verwendet. Die gleiche Kupplungseinrichtung wird zum Beseitigung oder Verhinderung von Schwingungen im Antriebsstrang verwendet.

Solche Kupplungseinrichtungen eignen sich infolge der elektronischen Steuerung der Hilfskraft besonders gut für automatische Kraftfahrzeugkupplungen.

Der Aufwand für die gesamte Einrichtung ist aber relativ groß und infolge der Verkettung der einzelnen Geräte störanfällig

Es ist deshalb Aufgabe der Erfindung, eine Kupplungseinrichtung nach dem Oberbegriff von Anspruch 1 weiterzuentwickeln und die Störanfälligkeit zu verringern

Diese Aufgabe wird mit den kennzeichnenden Merkmalen von Anspruch 1 erfüllt.

Die Vereinigung der eigentlichen Stelleinrichtung für die Kupplung mit der Steuereinrichtung für die Hilfskraft und die Einbeziehung der Wegmeßeinrichtung in eine komplexe Betätigungseinheit ergibt einen einfacheren kostengünstigeren und auch übersichtlicheren Aufbau, der besonders auch während der Montage große Vorteile bringt. Infolge der direkten Verbindung der Magnetventile mit dem Betätigungszylinder entfallen die typischen Schlauchleitungen, so daß die Störanfälligkeit verringert wird. Darüber hinaus kann das Funktionsverhalten verbessert werden, weil die notwendige Menge der Hilfskraft - Druckluft, Hydrauliköl, Getriebeöl - geringer sein kann als bei getrenntem Steuer- und Betätigungsgerät. Auch für die Wegmeßeinrichtung ergibt sich eine höhere Funktionssicherheit, weil sie geschützt am Betätigungszylinder direkt angeordnet ist.

Infolge der Vereinigung von 3 Gerätefunktionen in ein Gehäuse verringern sich die notwendigen Anschlüsse für die Hilfskraft und die Strom- und Steuerleitungen. Besonders günstig ist die Anordnung von nur einem Mehrfachstecker für diese Strom- und Steuerleitung, die nunmehr auch für die Meldungen der Wegmeßeinrichtung nur noch zwischen dem elektronischen Steuergerät und der Betätigungseinheit nötig sind.

Erhält die notwendige Entlüftung des Betätigungszylinders, die ja von zumindest einem Magnetventil gesteuert wird, an der Betätigungseinheit eine Anschlußmöglichkeit, so ist z. B. bei Druckluft nicht nur ein Schalldämpfer aufsetzbar, sondern es ist auch eine geeignete Verlängerung montierbar, die die Watfähigkeit des Fahrzeuges auch im Zusammenhang mit der Kupplung und deren Betätigung ermöglicht. Infolge von wenigstens einem Magnetventil für jede Betätigungsrichtung des Kolbens im Betätigungszylinder ist eine genau definierte Öffnung und Schließung der Kupplung in bezug auf Weg und Geschwindigkeit möglich, wobei ein Magnetventil die Befüllung des Kolbenraumes und das andere Magnetventil die Entlüftung steuert, weil die Kupplung im Prinzip über Federn geschlossen wird und nur der federbelastete Kupplungsausrückhebel über den Kolben des Betätigungszylinders verstellt wird. Werden für jede Betätigungsrichtung zwei Magnetventile mit unterschiedlichen Blenden verwendet, so ist über die elektronische Steuerung durch eine geeignete Kombination jede gewünschte Öffnungs- und Schließgeschwindigkeit realisierbar. Besonders vorteilhaft und einfach ist die Kupplungseinrichtung über Druckluft als Hilfskraft zu betreiben, wenn im Fahrzeug eine Druckluftquelle für eine andere Verwendung schon vorhanden ist. Wird der Betätigungszylinder, gemessen am Arbeitshub, mit einem größeren Gesamthub vorgesehen, so kann über die Wegmeßeinrichtung auch der nicht vermeidbare Verschleiß der Kupplung selbsttätig ausgeglichen werden. Wenn die Magnetventile über eine elektrische Ansteuerung geöffnet werden und stromlos geschlossen sind, wird bei einem Stromausfall oder einer Störung in der Elektronik die gerade bestehende Stellung der Kupplung gehalten, so daß gefährliche ungewollte Verstellungen der Kupplung nicht möglich sind.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Weitere Einzelheiten der Erfindung werden anhand von Zeichnungen und einem Ausführungsbeispiel erläutert.

Es zeigen:

Fig. 1 ein Blockschaltbild einer Kupplungseinrichtung,

Fig. 2 eine teilweise dargestellte und geschnittene Kupplung mit kompletter Betätigungseinheit,

Fig. 3 ein Beispiel einer Betätigungseinheit im Schnitt.

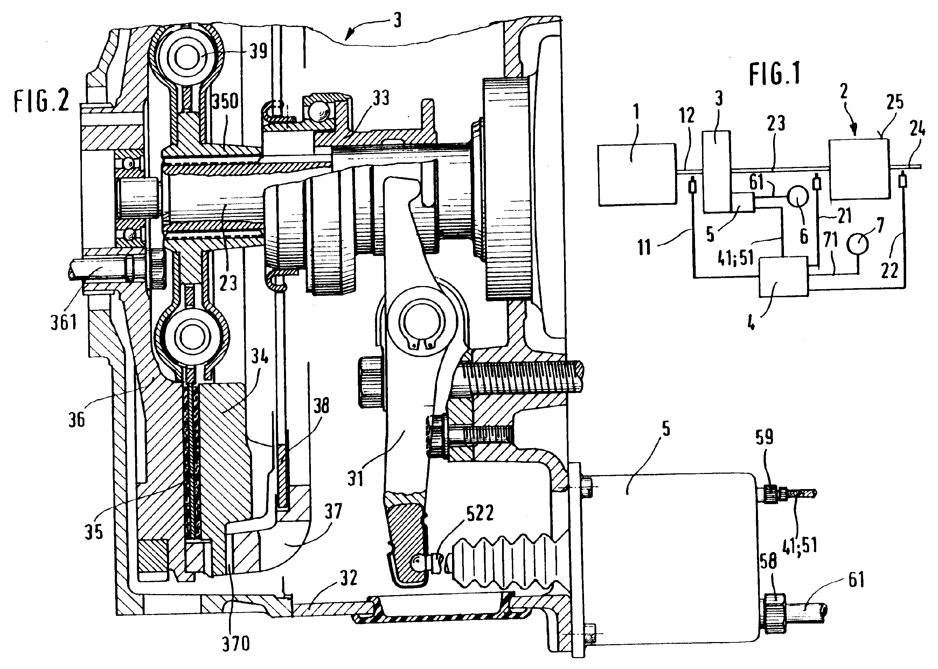

In Fig. 1 ist die Kupplungseinrichtung für ein Kraftfahrzeug in einem Blockschaltbild dargestellt, wobei zwischen einer Antriebsmaschine 1 und einem Getriebe 2 eine Anfahr- und Schaltkupplung 3 angeordnet ist. An der Anfahr- und Schaltkupplung 3 ist eine komplexe Betätigungseinheit 5 angeflanscht, die über eine Druckleitung 61 mit einer Druckmittelquelle 6 einer Hilfskraft und über elektrische Leitung 41 mit einem elektronischen Steuergerät 4 verbunden ist. Die Stromversorgung erfolgt über die Leitung 71 von einer Stromquelle 7. Dem elektronischen Steuergerät 4 werden neben der Motordrehzahl der Motorabtriebswelle 12, Leitung 11, die Drehzahlen der Getriebeeingangswelle 23, Leitung 21, und der Getriebeausgangswelle 24, Leitung 22, zugefürt. Weiter erhält das elektronische Steuergerät 4 Informationen, wie sie in der PCT/EP 86/00544 bzw. DE 37 10 015.7 beschrieben sind.

Nach Fig. 2 ist die komplexe Betätigungseinheit 5 an die Kupplungsglocke 32 einer trocken wirkenden Anfahr- und Schaltkupplung 3 angeflanscht, welche als gezogene Membranfederkupplung ausgebildet ist. Unmittelbar auf der Eingangswelle 23 des Getriebes 2 ist die Kupplungsscheibe 35 in axialer Richtung zwischen der Schwungscheibe 36 und der Druckplatte 34 drehfest angeordnet. Die Schwungscheibe 36 ist über die Schrauben 361 mit der Abtriebswelle 12 der Antriebsmaschine 1 verbunden, so daß die Schwungscheibe 36 das mit ihr fest verbundene Kupplungsgehäuse 37 mit der Druckplatte 34 und auch die Membranfeder 38 in der jeweiligen Motordrehzahl umläuft.

An der Kupplungsglocke 32 ist noch ein Kupplungsausrückhebel 31 schwenkbar gelagert, der in den Ausrücker 33 eingreift und über die Kolbenstange 522 von der komplexen Betätigungseinheit 5 verstellt wird. Zwischen der Nabe 350, der Kupplungsscheibe 35 und der Kupplungsscheibe selbst ist noch ein allgemein bekannter Torsionsschwingungsdämpfer 39 angeordnet.

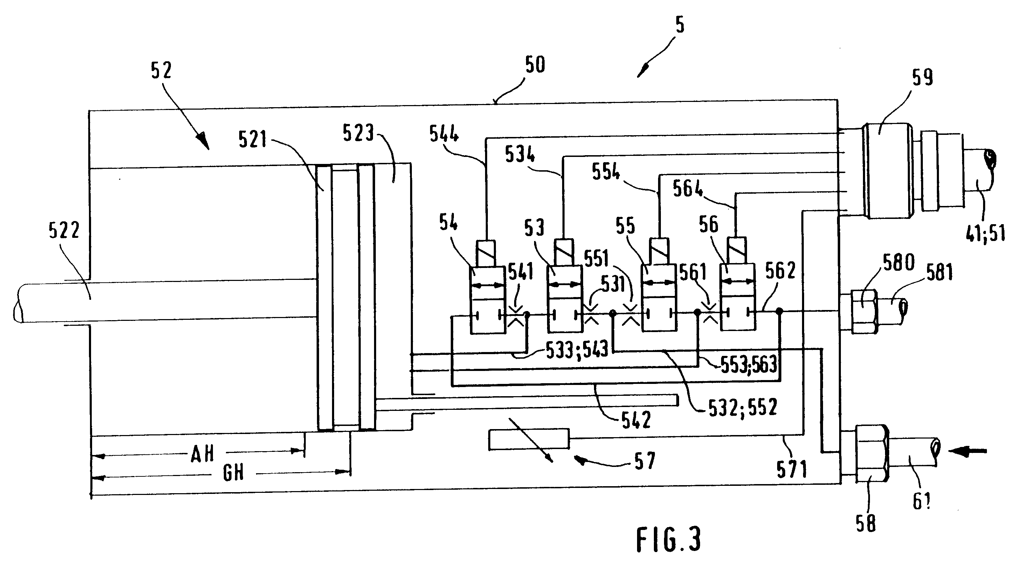

Die Fig. 3 zeigt in schematischer Darstellung den Aufbau der komplexen Betätigungseinheit 5 mit dem Betätigungszylinder 52, in dem ein Kolben 521 über Druckmittel in eine Richtung bewegbar ist - nach links -, während die Rückführung über Federn - in diesem Beispiel über die Membranfeder 38 der Anfahr- und Schaltkupplung 3 über die Kolbenstange 522 und den Kupplungsausrückhebel 31 und den Ausrücker 33 (Fig. 2) - erfolgt. Der Gesamthub GH des Kolbens 521 und der Arbeitshub AH sind so grob bemessen, daß unter Berücksichtigung der Übersetzung im Kupplungsausrückhebel 31 die Kupplung 3 über den Arbeitshub immer sicher geöffnet wird. Ein definierter Verschleiß und Einbautoleranzen in der Kupplung werden beim Gesamthub berücksichtigt. Mit dem Kolben 521 wirkt noch eine Wegmeßeinrichtung 57 zusammen, deren Informationen über die Leitung 571 und über den Mehrfachsteckanschluß 59 und die Leitung 51 zum elektronischen Steuergerät 4 geleitet werden. Mindestens je ein Magnetventil 53, in diesem Beispiel zwei Magnetventile 53, 55, sind über Leitungen 532, 552 mit einem Druckversorgungsanschluß 58 und über die Leitung 61 mit einer Druckmittelquelle 6 verbunden. Mindestens ein Magnetventil 54, in diesem Beispiel zwei Magnetventile 54, 56, haben je eine Leitung 542, 562 zum Entlüftungsanschluß 580. Bei Druckluft, wie in unserem Beispiel, ist in der Betätigungseinheit 5 oder am Entlüftungsanschluß 580 ein nicht dargestellter Schalldämpfer angeschlossen. Bei einer watfähigen Ausstattung des Fahrzeuges kann der Schalldämpfer oder das Ende der Entlüftungsleitung 581 auch entsprechend hoch angeordnet werden. Die zweiten Anschlüsse der Magnetventile 53 bis 56 sind über die Leitungen 533, 543, 553 und 563 mit dem Druckraum 523 des Betätigungszylinders 52 verbunden. Zumindest an einem Druckmittelanschluß von jedem Magnetventil 53 bis 56 können noch Blenden 531, 541, 551, 561 angeordnet sein, durch die der Druckmittelzu- bzw. -abfluß im Querschnitt definiert werden kann. Daneben sind die Blenden gut zugänglich angeordnet, so daß ein Wechsel leicht, vorrangig von außen, möglich ist. Die Magnetventile 53 bis 56 sind noch über die elektrischen Leitungen 534, 544, 554 und 564 mit einem Mehrfachsteckanschluß 59 verbunden, der über die Leitung 41, 51 zum Anschluß an das elektronische Steuergerät 4 an der komplexen Betätigungseinheit 5 angeordnet ist. Damit ist dieser Anschluß mit nur einem elektrischen Kabel möglich. Die Druckleitungen vom Druckversorgungsanschluß 58 zu den Magnetventilen und zum Druckraum 523 des Betätigungszylinders 52 sowie die Entlüftungsleitungen von diesem über die Magnetventile zum Entlüftungsanschluß 580 werden zur Erhöhung der Sicherheit in das Gehäuse 50 der Betätigungseinheit 5 eingearbeitet.

Die Kupplungseinrichtung wirkt wie folgt: Zum Öffnen der Anfahr- und Schaltkupplung 3 werden vom elektronischen Steuergerät 4 über die Leitungen 41 und 534 und 554 die Magnetventile 53, 55 geöffnet, so daß Druckmittel, z. B. Druckluft, die von der Druckmittelquelle 6 über die Leitung 61, 532 und 552 immer an den Magnetventilen 53, 55 ansteht, über die Leitung 533, 553 dem Druckraum 523 zugeleitet wird. Der Kolben wird aus seiner Ausgangslage, die der völlig geschlossenen Kupplung entspricht, nach links, z. B. in die Öffnungslage, bewegt. Über die Kolbenstange 522, den Kupplungsausrückhebel 31 und den Ausrücker 33 wird die Membranfeder 38 in bekannter Weise von der Druckplatte 34 abgehoben, so daß der Andruck der Kupplungsscheibe 35 an das Schwungrad 36 aufgehoben ist. Ohne dem Druck der Membranfeder 38 kann die Druckplatte 34 sich in der Führung 370 des Kupplungsgehäuses 37 axial - nach rechtsverschieben, so daß der Antriebsstrang geöffnet ist.

Die maximale Öffnungsgeschwindigkeit kann über die Blenden 531, 551 durch Querschnittsveränderungen der Druckleitungen eingestellt werden. Die Kupplung wird durch Federkraft geschlossen, damit die Schließfeder, oder wie in diesem Beispiel die Membranfeder 38, wirken kann, muß der Druckraum 523 entlüftet werden. Dazu werden die Magnetventile 54, 56 vom elektronischen Steuergerät 4 angesteuert und der Druckraum 523 wird über die Leitungen 543, 563 zu diesen Magnetventilen und die Leitungen 542, 562 zum Entlüftungsanschluß 580 entlüftet. Über die Blenden 541, 561 kann die maximale Entlüftungsgeschwindigkeit des Druckraumes 523 und damit die Schließgeschwindigkeit der Kupplung gleichfalls eingestellt werden. Die fortwährende funktionsbedingte Beeinflussung erfolgt jedoch über das elektronische Steuergerät 4. Dazu werden z. B. die mit unterschiedlichen Blenden eingestellten Magnetventile 53 bis 56 - je zwei zum Befüllen und Entlüften des Druckraumes 523 - unterschiedlich lange und im Pulsmodulationsverfahren geöffnet, so daß sich fortwährend unterschiedliche Befüll- und Entlüftungsverhältnisse ergeben, weil durch die Veränderungen der Pulsmodulation die Öffnungszeit für jedes Ventil sich zusätzlich verändern läßt. Für einfachere Steuerungen oder bei geeigneten Magnetventilen kann zum Befüllen und Entlüften des Druckraues 523 jeweils nur ein Magnetventil angeordnet sein. Jede Bewegung des Kolbens 521 wird von der Wegmeßeinrichtung 57 erfaßt. Mit der erfaßten und gespeicherten Stellung des Kolbens bei geschlossener Kupplung können in einfacher Weise der Verschleiß und die neuen Bedingungen in bezug auf den Weg nach Reparaturen ermittelt werden, so daß die Öffnung mit einem immer gleichen Arbeitshub gewährleistet werden kann. Als Druckmittel kann neben Luft auch Hydraulik- oder Bremsöl eingesetzt werden.

Bezugzeichen

| | |
|---|---|
| 1 | Arbeitsmaschine |
| 11 | Leitung Motordrehzahl |
| 12 | Motorabtriebswelle |
| 2 | Getriebe |
| 21 | Leitung Getriebeeingangsdrehzahl |
| 22 | Leitung Getriebeausgangsdrehzahl |
| 23 | Getriebeeingangswelle |
| 24 | Getriebeausgangswelle |
| 25 | Getriebegehäuse |
| 3 | Anfahr- und Schaltkupplung |
| 31 | Kupplungsausrückhebel |
| 32 | Kupplungsglocke |
| 33 | Ausrücker/Ausrücklager |
| 34 | Druckplatte |
| 35 | Kupplungsscheibe |
| 350 | Nabe |
| 36 | Schwungrad |
| 361 | Schraüben |
| 37 | Kupplungsgehäuse |
| 370 | Führung |
| 38 | Membranfeder |
| 39 | Torsionsschwingungsdämpfer |
| 4 | Elektronisches Steuergerät |
| 41 | Elektrische Leitungen |
| 5 | Komplette Betätigungseinheit |
| 50 | Gehäuse |
| 51 | Elektrische Leitungen |
| 52 | Betätigungszylinder |
| 521 | Kolben |
| 522 | Kolbenstange |
| 523 | Druckraum |
| 53 | Magnetventile |
| 54 | Magnetventile |
| 55 | Magnetventile |

56 Magnetventile
531 Blenden
541 Blenden
551 Blenden
561 Blenden
532 Leitungen
542 Leitungen
552 Leitungen
562 Leitungen
533 Leitungen
543 Leitungen
553 Leitungen
563 Leitungen
534 Elektrische Leitungen
544 Elektrische Leitungen
554 Elektrische Leitungen
564 Elektrische Leitungen
57 Wegmeßeinrichtung
58 Druckversorgungsanschluß
580 Entlüftungsanschluß
581 Entlüftungsleitung
59 Mehrfachsteckanschluß
6 Druckquelle
61 Leitung
7 Stromquelle
71 Leitung
AH Arbeitshub
GH Gesamthub

**Patentansprüche**

1. Kupplungseinrichtung für ein Kraftfahrzeug mit einer zwischen einer Antriebsmaschine (1) und einem Getriebe (2) angeordneten Anfahr- und Schaltkupplung (3) und einer elektronisch gesteuerten (elektronisches Steuergerät 4) Kupplungsbetätigungseinrichtung, wobei die Betätigung des Kupplungsausrückhebels (31) über eine Hilfskraft erfolgt und die Stellung der Kupplung (3) über eine Wegmeßeinrichtung (57) erfaßt wird, dadurch **gekennzeichnet**, daß die Kupplungsbetätigungseinrichtung aus einer an der Kupplung (3) angeordneten Betätigungseinheit (5) besteht, in der ein Betätigungszylinder (52) für einen Kupplungsausrückhebel (31) mehrere die Hilfskraft steuernde Magnetventile (53 bis 56) und die Wegmeßeinrichtung (57) angeordnet sind und die Druckversorgung für die Hilfskraft über einen lösbaren Druckversorgungsanschluß (58) sowie die Strom- und Steuerleitungen (41, 51) für die Magnetventile (53 bis 56) und die Wegmeßeinrichtung (57) über Steckanschluß (59) erfolgt.

2. Kupplungseinrichtung nach Anspruch 1, dadurch **gekennzeichnet**, daß für die elektrischen Leitungen (41, 51) nur ein Mehrfachsteckanschluß (59) angeordnet ist.

3. Kupplungseinrichtung nach Anspruch 2, dadurch **gekennzeichnet**, daß noch ein Anschluß für die Entlüftung (580) angeordnet ist.

4. Kupplungseinrichtung nach Anspruch 3, dadurch **gekennzeichnet**, daß mehrere Magnetventile (53 bis 56) angeordnet sind, wobei zumindest je ein Magnetventil (53, 54) für je eine Betätigungsrichtung eines Kolbens (521) des Betätigungszylinders (52) angeordnet ist.

5. Kupplungseinrichtung nach Anspruch 4, dadurch **gekennzeichnet**, daß für jede Betätigungsrichtung des Kolbens (521) je zwei Magnetventile (53, 55; 54, 56) angeordnet sind und daß in einer die hilfskraftsteuernden Anschlüsse austauschbare Blenden (531, 541, 551, 561) angeordnet sind.

6. Kupplungseinrichtung nach Anspruch 5, dadurch **gekennzeichnet**, daß die Blenden (531, 551; 541, 561) von zwei für eine Betätigungsrichtung angeordnete Magnetventile (53, 55; 54, 56) unterschiedlich groß sind.

7. Kupplungseinrichtung nach Anspruch 6, dadurch **gekennzeichnet**, daß der Betätigungszylinder (521) über die Magnetventile (53, 55) mit einem pneumatischen Druck beaufschlagt wird.

8. Kupplungseinrichtung nach Anspruch 7, dadurch **gekennzeichnet**, daß der Gesamthub des Kolbens (GH) im Betätigungszylinder (52) größer ist als der notwendige Arbeitshub (AH).

9. Kupplungseinrichtung nach Anspruch 8, dadurch **gekennzeichnet**, daß die Magnetventile (53 bis 56) im stromlosen Zustand geschlossen sind.

## Revendications

1. Dispositif de commande de l'embrayage d'un véhicule comportant un embrayage de démarrage et de passage de vitesses (3) disposé entre un moteur d'entraînement (1) et une boîte de vitesses (2) ainsi qu'un dispositif d'actionnement de l'embrayage à commande électronique (bloc de commande électronique 4), sachant que l'actionnement du levier de débrayage (31) se fait au moyen d'une force auxiliaire et que la position de l'embrayage (3) est détectée par un transducteur de déplacement (57), **caractérisé en ce que** le dispositif d'actionnement de l'embrayage consiste en une unité d'actionnement (5) affectée à l'embrayage (3) et dans laquelle se trouve un cylindre d'actionnement (52) pour un levier de débrayage (31) comportant plusieurs électrovannes commandant la force auxiliaire (53 à 56) ainsi que le transducteur de position (57) et où l'alimentation en pression de la force auxiliaire est réalisée par une prise de courant embrochable par un raccordement d'alimentation en pression déconnectable (58) de même que par les conduites électriques et de commande (41, 51) pour les électrovannes (53 à 56) et le transducteur de déplacement (57).

2. Dispositif de commande d'embrayage selon la revendication 1, **caractérisé en ce que** l'on ne dispose que d'une prise multiple (59) pour les conduites électriques (41, 51).

3. Dispositif de commande d'embrayage selon la revendication 2, **caractérisé** en ce que l'on dispose en outre d'un raccordement pour la ventilation (580).

4. Dispositif de commande d'embrayage selon la revendication 3, **caractérisé en ce que** l'on dispose de plusieurs électrovannes (53 à 56), sachant qu'au moins une électrovanne (53, 54) est affectée à chacune des directions d'actionnement d'un piston (521) du cylindre d'actionnement (52).

5. Dispositif de commande d'embrayage selon la revendication 4, **caractérisé en ce que** deux électrovannes au moins (53,55,54,56) sont affectées à chacune des directions d'actionnement du piston (521) et que des orifices échangeables (531,541,551,561) sont disposés dans l'un des raccords commandant la force auxiliaire.

6. Dispositif de commande d'embrayage selon la revendication 5, **caractérisé en ce que** les orifices (531,551,541,561) de deux électrovannes affectées à un dispositif d'actionnement sont de tailles différentes.

7. Dispositif de commande d'embrayage selon la revendication 6, **caractérisé en ce que** le cylindre d'actionnement (52) recoit une pression pneumatique par l'intermédiaire des électrovannes (53, 55).

8. Dispositif de commande d'embrayage selon la revendication 7, **caractérisé en ce que** la course totale du piston (GH) dans le cylindre d'actionnement (52) est plus importante que la course de travail nécessaire (AH).

9. Dispositif de commande d'embrayage selon la revendication 8, **caractérisé en ce que** les électrovannes (53 à 56) sont fermées en l'absence de courant.

## Claims

1. Clutch device for a motor vehicle with a starting and gear selecting clutch (3), which is provided between an engine (1) and a transmission (2), and an electronically controlled (electronic control unit 4) clutch operating device, in which the clutch release lever (31) is operated via servo power and the position of the clutch (3) is detected by a displacement measuring device (57), characterised in that the clutch operating device consists of an operating unit (5) which is provided at the clutch (3) and comprises an operating cylinder (52) for a clutch release lever (31), a plurality of solenoid valves (53 to 56), which control the servo power, and the displacement measuring device (57), and the pressure for the servo power is supplied via a removable pressure supply connection (58) as well as the power supply and control lines (41, 51) for the solenoid valves (53 to 56) and the displacement measuring device (57) via a plug-in connection (59).

2. Clutch device according to claim 1, characterised in that just one multiway plug-in connection (59) is provided for the electrical lines (41, 51).

3. Clutch device according to claim 2, characterised in that a further connection is provided for the ventilation (580).

4. Clutch device according to claim 3, characterised in that a plurality of solenoid valves (53 to 56) are provided, at least one respective solenoid valve (53, 54) being provided for a respective operating direction of a piston (521) of the operating cylinder (52).

5. Clutch device according to claim 4, characterised in that two respective solenoid valves (53, 55; 54, 56) are provided for each operating direction of the piston (521), and that interchangeable diaphragms (531, 541, 551, 561) are provided in one of the connections controlling the servo power.

6. Clutch device according to claim 5, characterised in that the diaphragms (531, 551; 541, 561) of two solenoid valves (53, 55; 54, 56) provided for one operating direction are of different sizes.

7. Clutch device according to claim 6, characterised in that pneumatic pressure acts on the operating cylinder (52) via the solenoid valves (53, 55).

8. Clutch device according to claim 7, characterised in that the total stroke (GH) of the piston in the operating cylinder (52) is greater than the necessary power stroke (AH).

9. Clutch device according to claim 8, characterised in that the solenoid valves (53 to 56) are closed in the absence of current.

FIG.1

FIG.2

FIG. 3